**Europäisches Patentamt**

**European Patent Office**

**Office européen des brevets**

(11) Veröffentlichungsnummer: **0 051 726**
A1

# EUROPÄISCHE PATENTANMELDUNG

(21) Anmeldenummer: **81107389.9**

(51) Int. Cl.³: **H 04 M 1/72**

(22) Anmeldetag: **18.09.81**

(30) Priorität: **12.11.80 DE 3042610**

(43) Veröffentlichungstag der Anmeldung: **19.05.82**
Patentblatt 82/20

(84) Benannte Vertragsstaaten: **CH DE FR GB IT LI SE**

(71) Anmelder: **Licentia Patent-Verwaltungs-GmbH, Theodor-Stern-Kai 1, D-6000 Frankfurt/Main 70 (DE)**

(72) Erfinder: **Ruff, Günter Wolfgang, Dipl.-Ing., Drosselweg 15, D-7151 Auenwald-2 (DE)**

(74) Vertreter: **Schickle, Gerhard, Dipl.-Ing. et al, Licentia Patent-Verwaltungs-GmbH Theodor-Stern-Kai 1, D-6000 Frankfurt/Main 70 (DE)**

(54) **Teilnehmersprechstelleneinrichtung.**

(57) Die Erfindung betrifft eine Teilnehmersprechstelleneinrichtung in einem Wählnetz mit mehreren Teilnehmern und ist dadurch gekennzeichnet, daß eine tragbare zweite Sprechstelle vorgesehen ist, die von der Teilnehmersprechstelleneinrichtung drahtlos abgesetzt ist, und daß über die Teilnehmersprechstelleneinrichtung eine Verbindung zwischen der zweiten Sprechstelle und den Teilnehmern aufbaubar ist.

EP 0 051 726 A1

- 1 -

Licentia Patent-Verwaltungs-GmbH     NE2-BK/Ruf/wei
Theodor-Stern-Kai 1                   BK 80/125
D-6000 Frankfurt 70


Teilnehmersprechstelleneinrichtung


Die Erfindung betrifft eine Teilnehmersprechstelleneinrichtung in einem Wählnetz mit mehreren Teilnehmern.

Durch die DE-AS 15 66 826 ist eine Personensucheinrichtung in einer Nebenstellentelefonanlage bekanntgeworden, bei der bei einem Ruf durch einen Nebenstellenteilnehmer auf der Nebenstellenrufnummer des gerufenen Teilnehmers zusätzlich zum normalen Rufzeichen besondere Suchzeichen von einer Sucheinrichtung ausgelöst werden und bei der die Nebenstellentelefonanlage mit dem Rufsender einer mit drahtloser Übertragung arbeitenden Personenrufanlage über einen Signalumsetzer verbunden ist, der die Sucheinrichtung darstellt und die Aussendung einer der gewählten Rufnummer entsprechenden Kenntonfolge durch den Rufsender bewirkt.

Durch diese Personensucheinrichtung ist es möglich, einen Teilnehmer entweder über seinen Nebenstellenapparat oder über sein tragbares Sende-/Empfangsgerät zu erreichen, wobei die Kenntonfolge erst anschließend an mehrere Rufzeichen des

0051726

gerufenen Nebenstellenteilnehmers ausgesendet wird und wobei mittels eines Rückmeldesenders von der gerufenen Person eine Sprechverbindung mit dem anrufenden Nebenstellenteilnehmer drahtlos zwischen der gerufenen Person und der Zentrale der Personensucheinrichtung und über Draht zwischen dieser Zentrale und der Nebenstellenanlage und dem rufenden Teilnehmer hergestellt wird.

Nachteilig bei dieser Personensucheinrichtung ist, daß jeweils nur ein Gespräch zu einer Zeit stattfinden kann, wenn für die Einrichtung nur eine einzige Trägerfrequenz zur Verfügung steht.

Übliche Telefonapparate verfügen über einen Handapparat mit Mikrofon- und Lautsprecherkapsel. Sie sind nachteilig insoweit, daß beim Telefonieren eine gleichzeitige manuelle Betätigung nicht oder nur sehr schwer durchführbar ist, weil eine Hand in Anspruch genommen ist. Es gibt zwar Freisprechtelefone, die jedoch nur in kleinen bis mittleren Räumen Anwendung finden können. Ist der Teilnehmer bei ankommendem Ruf außerhalb dieses Raumes, so muß er sich, falls er den Wecker überhaupt hört, zur Aufnahme des Gespräches zum Telefonapparat begeben, um denselben betätigen zu können.

Aufgabe der Erfindung war es daher, die genannten Nachteile des Standes der Technik zu vermeiden und eine unaufwendige Teilnehmersprechstelleneinrichtung anzugeben, die es ermöglicht, einen Telefonanruf entgegenzunehmen oder zu tätigen, ohne daß der Teilnehmer in der Ausübung einer nebenher durchgeführten manuellen Tätigkeit eingeschränkt wird und daß der Teilnehmer auch dann erreichbar ist, wenn er sich nicht in akustischer Nähe des Telefonapparates oder einer eventuellen Zweitweckeinrichtung befindet und daß sich der Teilnehmer nicht an diesen Telefonapparat zu dessen Betätigung begeben muß. Außerdem soll der Teilnehmer ein Gespräch auch in der Rückrichtung aufbauen können, ohne daß er seine Teilnehmersprechstelleneinrichtung betätigen muß.

Die Lösung der erfindungsgemäßen Aufgabe erfolgt durch die in den Patentansprüchen angegebenen Mittel.

Durch die erfindungsgemäße Teilnehmersprechstelleneinrichtung ist es möglich, mit Hilfe einer drahtlos abgesetzten tragbaren zweiten Sprechstelle ein Gespräch mit anderen Teilnehmern eines Wählnetzes zu führen, ohne daß er in der manuellen Durchführung von Nebenarbeiten stark beeinträchtigt ist. Von besonderem Vorteil ist die erfindungsgemäße Teilnehmersprechstelleneinrichtung auch für Kranke, Verletzte oder Notrufende, deren Bewegungsfähigkeit eingeschränkt ist. Weiterhin können auch Gespräche abgewickelt oder aufgebaut werden, ohne daß der normale Telefonapparat betätigt werden muß, d.h., Gespräche können auch außerhalb des Hauses, im Garten usw. getätigt oder angenommen werden.

Vorteilhafte Ausgestaltungen der erfindungsgemäßen Teilnehmersprechstelleneinrichtung sind in den Unteransprüchen angegeben. Wird die Teilnehmersprechstelleneinrichtung mit einer automatischen Wähleinrichtung und einem Speicher für mehrere z.B. häufig anzurufende Telefonnummern ausgerüstet, die der Teilnehmer mittels Kurzcode aufrufen kann, so wird er bei der manuellen Wahl erheblich entlastet.

In einer vorteilhaften Ausgestaltung ist die zweite Sprechstelle als Armbanduhr, Taschenuhr oder dergleichen tragbar und verfügt über elektronische Zeiteinrichtung mit Anzeige- und Tastatureinrichtung. Besonders günstig ist es, bei der zweiten Sprechstelle Sende- und Empfangsfunktionen zu trennen, so z.B. die Armbanduhr bzw. die Taschenuhr mit einem Mikrofonsender zu versehen und einen Ohrhörer als Empfänger auszubilden. Da die zweite Sprechstelle insgesamt weitgehend integrierbar ist, insbesondere mit VLSI-Technik, nimmt sie nur wenig Volumen ein und ist dadurch praktisch nicht hinderlich.

In einer anderen Ausführung, die eine kompakte Lösung dar-

0051726

stellt, wird Mikrofon und Lautsprecher durch dasselbe Bauelement realisiert, wodurch ein noch kleineres Volumen erreichbar ist.

Je nach Anforderung der Reichweite, der Fernsprechteilnehmerdichte bzw. -verteilung sind die zweiten Sprechstellen über
Funk, Ultraschall oder über Licht oder jeweils abwechselnd
nach diesen Nachrichtenübertragungsmethoden, kombiniert mit
verschiedenen Sende- und Empfangsfrequenzen, abzusetzen, so
daß eine gegenseitige Störung von mehreren Teilnehmersprechstelleneinrichtungen vermieden wird.

Andererseits ist es auch möglich, daß sich ein Teilnehmer,
beispielsweise zu Besuch bei einem anderen Teilnehmer, mit
seiner zweiten Sprechstelle auf die Teilnehmersprechstelleneinrichtung des gastgebenden Teilnehmers durch Umstellung
des Übertragungsverfahrens und Einstellung der entsprechenden
Frequenzen aufschalten kann. Um einen Mißbrauch zu verhindern,
ist in einer Weiterführung der Erfindung vorgesehen, daß die
Verbindung zwischen zweiter Sprechstelle und der Teilnehmersprechstelleneinrichtung erst nach Austausch von Teilnehmernummer, Sprechstellennummer und Kennwörtern ermöglicht und,
um Mithörmöglichkeiten auszuschließen, in einen verschlüsselten Übertragungsbetrieb überführt wird. Für weniger aufwendige Teilnehmersprechstelleneinrichtungen reicht auch eine verschleierte Übertragung aus. Die Schlüssel zu dieser gesicherten Übertragung sollten mehrfach vorhanden und durch verschiedene, vorher in der Teilnehmersprechstelleneinrichtung hinterlegte Kennwörter aufrufbar sein. Einer dieser Schlüssel kann
z.B. für obenangeführte Gastgespräche vorgesehen sein.

In einer Weiterbildung der Erfindung werden mit Hilfe der
elektronischen Zeiteinrichtung Sprechzeit oder die aufgelaufenen Gebühreneinheiten angezeigt bzw. abgespeichert.
Wenn bei Gesprächsaufbau die Sprechstellennummer, Teilnehmernummer oder die Personenkennnummer des jeweiligen Benutzers
der Sprechstelle eingegeben wird, so kann durch zentrale Ver-

0051726

mittlungseinrichtungen nach Gesprächsschluß das Benutzerkonto entsprechend belastet werden.

- - - - - - -

- 1 -

Licentia Patent-Verwaltungs-GmbH     NE2-BK/Ruf/wei
Theodor-Stern-Kai 1                   BK 80/125
D-6000 Frankfurt 70


Patentansprüche


1. Teilnehmersprechstelleneinrichtung in einem Wählnetz mit mehreren Teilnehmern, dadurch gekennzeichnet, daß eine tragbare zweite Sprechstelle vorgesehen ist, die von der Teilnehmersprechstelleneinrichtung drahtlos abgesetzt ist, und daß über die Teilnehmersprechstelleneinrichtung eine Verbindung zwischen der zweiten Sprechstelle und den Teilnehmern aufbaubar ist.

2. Teilnehmersprechstelleneinrichtung nach Anspruch 1, dadurch gekennzeichnet, daß in der Teilnehmersprechstelleneinrichtung eine automatische Wähleinrichtung vorgesehen ist.

3. Teilnehmersprechstelleneinrichtung nach Anspruch 1 oder 2, dadurch gekennzeichnet, daß die zweite Sprechstelle über eine elektronische Zeiteinrichtung mit Anzeige- und Tastatureinrichtung verfügt und als Armbanduhr, Taschenuhr oder dergleichen tragbar ist.

4. Teilnehmersprechstelleneinrichtung nach einem der vorher-

0051726

gehenden Ansprüche, dadurch gekennzeichnet, daß die zweite
Sprechstelle über Funk, Ultraschall oder Licht abgesetzt
ist, wobei Sende- bzw. Empfangsfrequenzen wählbar sind.

5. Teilnehmersprechstelleneinrichtung nach einem der vorhergehenden Ansprüche in Verbindung mit Anspruch 3, dadurch
gekennzeichnet, daß die Verbindung zwischen zweiter
Sprechstelle und der Teilnehmersprechstelleneinrichtung
durch Austausch von eigener Teilnehmernummer, Sprechstellennummer und Kennwörtern, die sowohl in der Teilnehmersprechstelleneinrichtung als auch in der zweiten Sprechstelle mit zugeordneten Schlüsseln hinterlegt sind, in
eine Betriebsweise mit verschlüsselter oder verschleierter Übertragung überführbar ist.

6. Teilnehmersprechstelleneinrichtung nach einem der Ansprüche 3 bis 5 in Verbindung mit Anspruch 2, dadurch gekennzeichnet, daß in der Wähleinrichtung mehrere Nummern von
Teilnehmern gespeichert sind, die durch Kurzcode aufrufbar sind.

7. Teilnehmersprechstelleneinrichtung nach einem der vorhergehenden Ansprüche in Verbindung mit Anspruch 3, dadurch
gekennzeichnet, daß die elektronische Zeiteinrichtung
über terminierbare Weck- und über Taschenrechnerfunktionen verfügt.

8. Teilnehmersprechstelleneinrichtung nach einem der vorhergehenden Ansprüche in Verbindung mit Anspruch 3, dadurch
gekennzeichnet, daß die Sprechzeit bzw. die aufgelaufenen
Gebühreneinheiten anzeigbar oder speicherbar sind.

9. Teilnehmersprechstelleneinrichtung nach einem der vorhergehenden Ansprüche in Verbindung mit Anspruch 5, dadurch
gekennzeichnet, daß in der zweiten Sprechstelle nur
das von der Teilnehmersprechstelleneinrichtung erwartete

- 3 -                        BK 80/125

Kennwort abgespeichert und daß das Kennwort bzw. die rufende Teilnehmernummer zur Übertragung an die Teilnehmersprechstelleneinrichtung über die Tastatureinrichtung eingebbar sind.

10. Teilnehmersprechstelleneinrichtung nach einem der vorhergehenden Ansprüche; dadurch gekennzeichnet, daß die zweite Sprechstelle über einen Wechselsprechbetrieb ermöglichenden Mikrofon-Lautsprecher verfügt.

11. Teilnehmersprechstelleneinrichtung nach einem der Ansprüche 1 bis 9, dadurch gekennzeichnet, daß die zweite Sprechstelle mit einem Ohrhörer ausgerüstet ist.

0051726

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 4 039 760 (GREGORY) <br><br> * Spalte 3, Zeile 17 bis Spalte 4, Zeile 35 * <br> --- | 1,4 |
| A | US - A - 4 213 009 (SUZUKI) <br><br> * Spalte 1, Zeilen 11-27; Spalte 2, Zeilen 35-66 * <br> --- | 1,5 |
| A | DE - A - 2 609 283 (OSTERHOLZER) <br><br> * insgesamt * <br> --- | 1,4 |
| A | GB - A - 2 012 522 (SOUNDIC ELECTRONICS) <br><br> * Seite 1, Zeilen 19-42 * <br> & DE - A - 2 855 824 <br> --- | 2,6 |
| A | DE - A - 2 606 691 (BLÜTHGEN) <br><br> * insgesamt * <br> --- | 3 |
| A | FR - A - 2 444 379 (JOUIN) <br><br> * insgesamt * <br> --- | 7,8 |
| A | DE - A - 2 820 096 (STANDARD ELEKTRIK) <br><br> * insgesamt * <br> --- | 1,4, 11 |
| P | DE - A - 2 918 494 (ELMEG) <br><br> * Seite 14, Zeile 19 bis Seite 19, Zeile 14 * <br> --- ./.. | 1-3,6 |

**KLASSIFIKATION DER ANMELDUNG (Int. Cl.³)**

H 04 M 1/72

**RECHERCHIERTE SACHGEBIETE (Int. Cl.³)**

H 04 M 1/72
H 04 M 11/02

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort Den Haag | Abschlußdatum der Recherche 11.02.1982 | Prüfer VERSLYPE |

EPA form 1503.1  06.78

| | Europäisches Patentamt | **EUROPÄISCHER RECHERCHENBERICHT** | Nummer der Anmeldung EP 81 10 7389 |
|---|---|---|---|

– 2 –

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| P | <u>DE - A - 2 933 219</u> (BUCHMEIER) * insgesamt * ----------- | 1,3-5, 7 | |
| | | | **RECHERCHIERTE SACHGEBIETE** (Int. Cl.³) |

EPA Form 1503.2  06.78